Europäisches Patentamt

European Patent Office

Office européen des brevets

(19)

(11) Numéro de publication: **0 049 675**

**A1**

(12) **DEMANDE DE BREVET EUROPEEN**

(21) Numéro de dépôt: **81420141.4**

(22) Date de dépôt: **30.09.81**

(51) Int. Cl.³: **F 16 C 35/077**

(30) Priorité: **02.10.80 FR 8021380**

(43) Date de publication de la demande:
**14.04.82 Bulletin 82/15**

(84) Etats contractants désignés:
**AT BE CH DE FR GB IT LI LU NL SE**

(71) Demandeur: **SIREM, Société Industrielle Radio-Electrique et Mécanique**
**82-86, rue du Château-Gaillard**
**F-69604 Villeurbanne(FR)**

(72) Inventeur: **Maucherat, Bernard**
**54, rue Sully-Allée 4**
**F-69150 Decines Charoieu(FR)**

(72) Inventeur: **Desseigne, Charles**
**18, rue Maryse Bastié**
**F-69008 Lyon(FR)**

(74) Mandataire: **Karmin, Roger et al,**
**Cabinet MONNIER 150, cours Lafayette**
**F-69003 Lyon(FR)**

(54) **Entretoise élastique perfectionnée utilisée pour le montage des roulements à bille.**

(57) L'entretoise (1) comprend une partie centrale annulaire pourvue d'un alésage (6) et des pattes (3) issues de la périphérie de la partie centrale (2) et qui sont orientées perpendiculairement à ladite partie. On coiffe le pourtour de la bague extérieure d'un roulement avec l'entretoise (1) de telle sorte qu'après mise en place de ce roulement dans son logement la partie centrale (2) est coincée entre le roulement et le fond de son logement tandis que les pattes (3) constituent des cales élastiques pour la bague extérieure dudit roulement.

Fig. 1

EP 0 049 675 A1

Entretoise élastique perfectionnée utilisée pour le montage des roulements à billes.

La présente invention est relative à des perfectionnements apportés aux entretoises élastiques destinées à l'ajustement des cages extérieures des roulements à billes dans leurs logements.

On sait que pour des raisons de prix de revient les pièces servant de palier, en particulier pour les arbres des petits moteurs électriques, sont réalisées de plus en plus souvent en alliage léger. Ces paliers sont destinés à recevoir des roulements à billes disposés dans des logements alésés qui doivent comporter une très grande précision d'exécution afin que la cage extérieure du roulement ne tourne pas mais qu'elle puisse se déplacer axialement en vue d'absorber les différences de dilatation pouvant survenir entre l'arbre et la carcasse du moteur.

Afin d'éviter des usinages coûteux résultant d'une grande précision on a pris l'habitude de réaliser l'alésage à une cote plus grande que celle correspondant au diamètre extérieur de la cage du roulement et d'interposer entre cette dernière et l'alésage un anneau élastique réalisé au moyen d'un ruban métallique ondulé. Un tel élément est d'une mise en place difficile puisqu'il se présente sous la forme d'une bande plate qu'il faut cambrer en vue de la faire coopérer avec la périphérie de la bague du roulement considéré. De plus on n'est jamais certain qu'un tel anneau élastique se maintienne en place sous l'effet des vibrations du moteur si bien qu'on a déjà vu des anneaux se dégager de leur emplacement et venir en contact avec les parties tournantes du moteur en provoquant ainsi des dégâts considérables.

On a également prévu d'intercaler entre la périphérie de la bague extérieure du roulement et le logement de ce dernier un manchon en néoprène principalement destiné d'ailleurs à absorber les vibrations, mais qui peut fort bien convenir pour le maintien des roulements dans les conditions ci-dessus exposées. Ce genre de manchon est à déconseiller car il constitue un écran pour l'échange thermique entre l'arbre du rotor et la carcasse du moteur.

Les perfectionnements qui font l'objet de la présente invention visent à remédier aux inconvénients des anneaux élastiques actuellement utilisés en vue de réduire le temps de montage et d'éviter les incidents dûs au dégagement desdits anneaux par rapport au logement du roulement.

L'entretoise élastique établie conformément à l'invention comporte d'une part des moyens de retenue axiale par rapport au roulement et d'autre part des moyens d'assembler élastiquement la cage extérieure d'un roulement à billes par rapport au logement de celui- ci.

Suivant un mode d'exécution préféré de la disposition qui précède l'entretoise élastique suivant l'invention comprend tout d'abord une rondelle coincée entre la cage extérieure du roulement et le fond de son logement et des dents périphériques planes orientées parallèlement à l'axe géométrique de la rondelle et donc du roulement et qui constituent chacune une lamelle plane que la périphérie de la cage extérieure du roulement déforme pour former la retenue élastique nécessaire au bon montage du roulement.

Le dessin annexé, donné à titre d'exemple, permettra de mieux comprendre l'invention, les caractéristiques qu'elle présente et les avantages qu'elle est susceptible de procurer :

Fig. 1 est une vue en perspective d'une entretoise établie conformément à l'invention.

Fig. 2 illustre l'entretoise élastique en cours de fabrication, c'est-à-dire immédiatement après son découpage dans une feuille mince d'acier à ressort.

Fig. 3 est une vue en bout partielle de l'entretoise élastique suivant l'invention.

Fig. 4 illustre le montage d'un roulement par rapport à son logement avec interposition d'une entretoise établie conformément à l'invention.

Fig. 5 montre la manière dont les dents de l'entretoise retiennent élastiquement la périphérie de la cage extérieure du roulement de fig. 4.

Fig. 6 est une vue semblable à celle de fig. 4 mais relative à une variante.

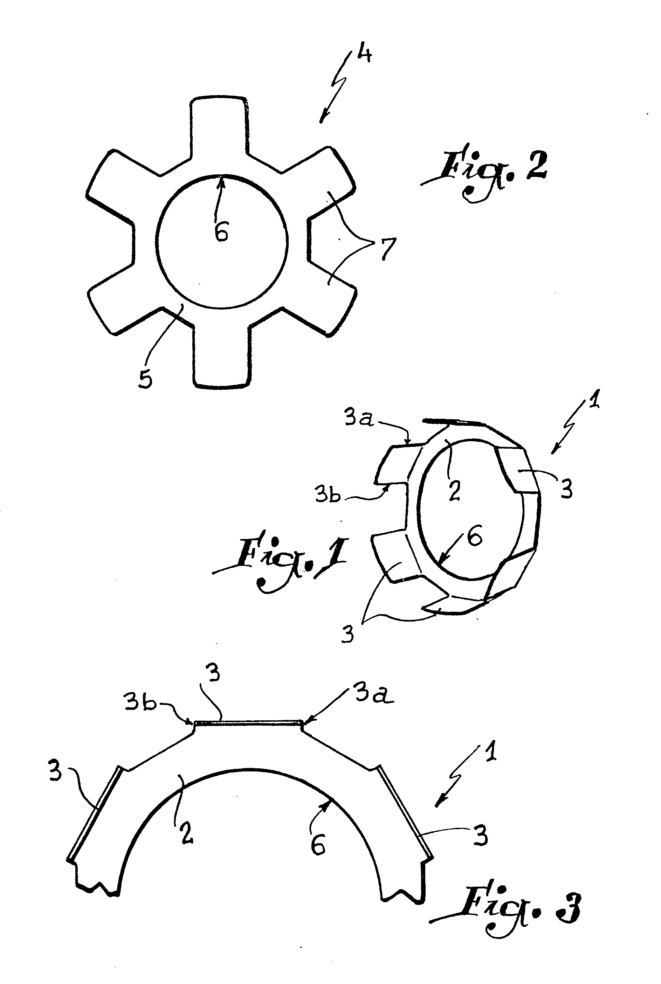

On a représenté en fig. 1 une entretoise élastique 1 établie conformément à l'invention et qui comprend essentiellement une rondelle plate 2 dont la périphérie est pourvue d'un certain nombre de pattes 3 prévues planes. Dans l'exemple représenté le nombre des pattes a été fixé à six. Ainsi on peut dire que chacune des pattes 3 de l'entretoise 1 constitue un méplat réalisé dans un cylindre fictif ayant pour base un cercle de diamètre légèrement plus grand que celui de la rondelle 2 et correspondant à l'alésage dans lequel doit se loger le roulement.

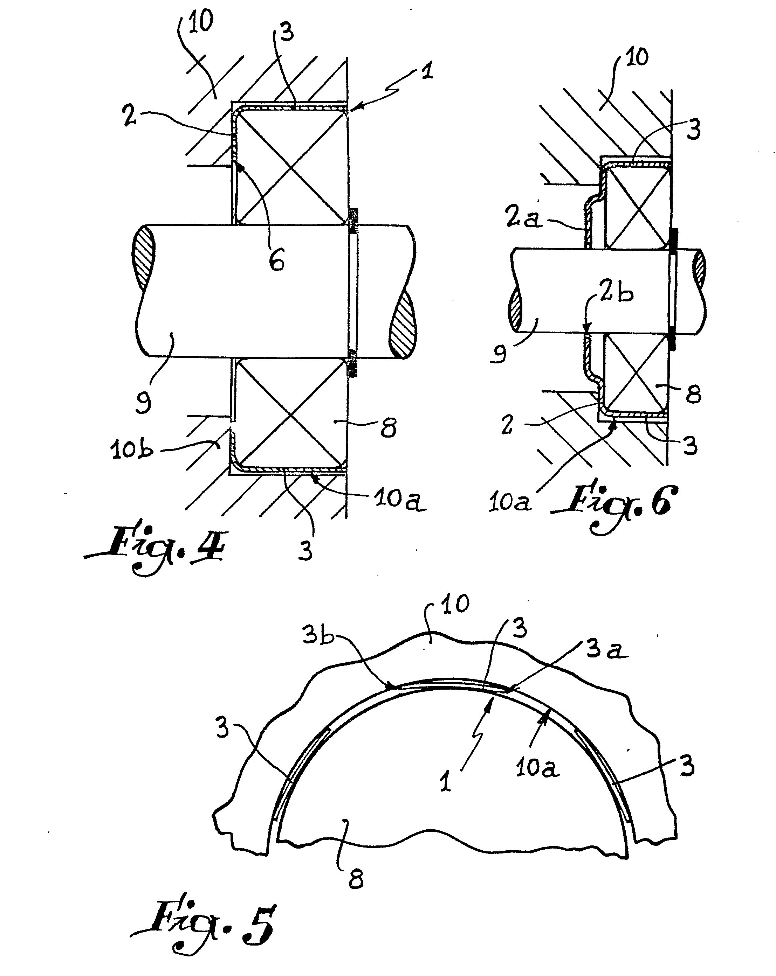

L'entretoise suivant l'invention est réalisée par découpage dans une feuille de tôle mince constituée par un acier à ressort de manière à constituer une espèce d'étoile 4 illustrée en fig. 2. Cette dernière comprend une partie centrale annulaire 5 pourvue d'un alésage 6 et d'un pourtour polygonal à partir duquel partent six dents carrées ou rectangulaires 7. Ces dernières sont ensuite cambrées perpendiculairement au plan de la partie annulaire 5 de manière à constituer les pattes 3 de l'entretoise 1. Le cambrage est effectué de manière que les dents 7 conservent, une fois cambrées, leur forme plate.

L'entretoise 1 constitue donc une espèce de cuvette dont on peut coiffer un roulement à billes ou autre 8 (fig. 4) puis après que ce roulement ait été monté sur un arbre 9 d'un appareil quelconque, l'ensemble peut être amené dans un palier 10 et plus précisément dans un logement 10a de celui-ci destiné à recevoir le roulement 8. Comme expliqué plus haut l'alésage du logement 10a est prévu plus grand que le diamètre de la cage extérieure du roulement 8, le jeu entre ces deux éléments étant compensé par les pattes 3 de l'entretoise 1. Le logement 10a comporte un épaulement 10b contre lequel bute la cage extérieure du roulement en emprisonnant la partie centrale ou rondelle 5 de l'entretoise de sorte que celle-ci est immobilisée axialement par rapport au palier 10. Comme illustré en fig. 5 chacune des pattes 3 qui est prévue plane est déformée entre la cage extérieure du roulement 8 et l'alésage constituant le logement 10a du palier 10, les bords longitudinaux 3a, 3b de chaque patte 3 coopérant avec ledit logement, tandis que la partie centrale de la patte est déformée élastiquement vers l'extérieur par le roulement. Pour chacune des pattes on constitue donc une espèce de lame de ressort propre à maintenir centré le roulement dans son logement 10a.

On observe que la largeur de la partie annulaire ou rondelle 2 de l'entretoise 1 est inférieure ou au plus égale à l'épaisseur de la cage extérieure du roulement 8 de manière qu'elle ne coopère qu'avec cette cage et non pas avec les éventuels couvre-roulements protégeant les billes ou les galets.

On a ainsi réalisé une entretoise élastique qui est parfaitement immobilisée dans le sens axial par rapport au logement d'un roulement de sorte qu'on est assuré qu'elle ne puisse se dégager. En outre le montage est extrêmement aisé puisque l'entretoise coiffe le roulement avant sa mise en place. Enfin la force élastique de maintien du roulement par rapport à son logement peut varier en changeant le nombre de pattes 3 de l'entretoise 1. On notera enfin que cette dernière peut être utilisée en coopération avec n'importe quel organe qui doit être monté avec tolérance dans un logement.

Comme illustré en fig. 6, la rondelle 2 pourrait être déportée en direction inverse des pattes 3 pour constituer un fond creux 2a percé d'un trou central 2b permettant le passage à jeu réduit de l'arbre 9. Le volume situé entre le fond 2a et

5

le roulement 8 pourrait alors servir de réserve de graisse dans le cas d'utilisation de roulements protégés ou semi-protégés. On pourrait réaliser une économie supplémentaire car il serait alors possible d'utiliser des roulements à un seul couvre-roulement.

Il doit d'ailleurs être entendu que la description qui précède n'a été donnée qu'à titre d'exemple et qu'elle ne limite nullement le domaine de l'invention dont on ne sortirait pas en remplaçant les détails d'exécution décrits par tous autres équivalents.

On a représenté et décrit chaque patte 3 comme étant reliée à la rondelle par une arête rectiligne. Il serait intéressant de prévoir cette arête courbe afin que chaque patte présente une élasticité constante sur toute sa hauteur. La jonction courbe peut avantageusement présenter un diamètre intérieur égal à celui extérieur de la cage extérieure du roulement.

Revendications de brevet

1. Entretoise élastique (1) notamment pour roulements à billes (8) du genre comprenant une bande ondulée enroulée autour de la périphérie de la cage extérieure dudit roulement (8), caractérisée en ce qu'elle comprend des moyens (2) d'être immobilisée dans le sens axial par rapport au roulement (8).

2. Entretoise élastique (1) suivant la revendication 1, caractérisée en ce que ses moyens (2) de retenue axiale sont constitués par une rondelle (2) dont la périphérie est munie de pattes (3) planes cambrées de manière à être orientées parallèlement à l'axe géométrique de ladite rondelle (2).

3. Entretoise élastique suivant la revendication 2, caractérisée en ce que chacune de ses pattes (3) constitue un méplat réalisé dans un cylindre fictif ayant pour base un cercle de diamètre correspondant à celui de l'alésage (10a) dans lequel doit se loger le roulement (8).

4. Entretoise élastique suivant la revendication 2, caractérisée en ce que la largeur de sa rondelle (2) est inférieure ou au plus égale à l'épaisseur de la bague extérieure du roulement (8).

5. Entretoise élastique suivant l'une quelconque des revendications 1 à 4, caractérisée en ce qu'elle est réalisée par découpage dans une feuille mince d'acier à ressort et cambrage des pattes (3).

6. Entretoise élastique suivant la revendication 5, caractérisée en ce que la rondelle (2) entoure un fond déporté (2a) pourvu d'un trou central (2b) pour le passage de l'arbre (9) ledit fond constituant réserve de graisse.

4

*Fig. 2*

6

7

5

3a

3b

2

3

6

3

1

*Fig. 1*

3

3b

3a

3

1

3

2

6

3

*Fig. 3*

Fig. 4

Fig. 6

Fig. 5

Office européen
des brevets

**RAPPORT DE RECHERCHE EUROPEENNE**

Numéro de la demande

EP 81 42 0141.4

| | DOCUMENTS CONSIDERES COMME PERTINENTS | | CLASSEMENT DE LA DEMANDE (Int. Cl.³) |
|---|---|---|---|
| Catégorie | Citation du document avec indication, en cas de besoin, des parties pertinentes | Revendication concernée | |
| X | FR - A1 - 2 351 307 (A.L. CLARET)<br>* revendications 2 à 4; fig. 4 à 7 *<br>-- | 1-3,<br>6 | F 16 C 35/077 |
| X | US - A - 2 504 776 (T.H. WOODFIELD et al.)<br>* colonne 2, lignes 38 à colonne 3, ligne 30; fig. 1 à 7 *<br>-- | 1-3,<br>5,6 | |
| | GB - A - 894 743 (VATRIC (CONTROL EQUIPMENT) LTD.)<br>* colonne 2, lignes 22 à 52; fig. 2 et 3 *<br>-- | 1,2,<br>4 | **DOMAINES TECHNIQUES RECHERCHES (Int. Cl.³)**<br><br>F 16 C 35/00 |
| | US - A - 2 506 404 (T.H. WOODFIELD et al")<br>* fig. 1 à 3 *<br>-- | 1,2 | |
| A | US - A - 2 992 868 (F. VACHA)<br>* fig. 1, 3 *<br>---- | | |
| | | | **CATEGORIE DES DOCUMENTS CITES**<br><br>X: particulièrement pertinent<br>A: arrière-plan technologique<br>O: divulgation non-écrite<br>P: document intercalaire<br>T: théorie ou principe a la base de l'invention<br>E: demande faisant interference<br>D: document cité dans la demande<br>L: document cite pour d'autres raisons<br><br>&: membre de la même famille, document correspondant |
| ⋉ | Le présent rapport de recherche a été établi pour toutes les revendications | | |

| Lieu de la recherche | Date d'achèvement de la recherche | Examinateur |
|---|---|---|
| Berlin | 04-12-1981 | MASSALSKI |

OEB Form 1503.1   06.78